(19) Europäisches Patentamt
European Patent Office
Office européen des brevets

(11) EP 3 021 110 A1

(12) EUROPEAN PATENT APPLICATION

(43) Date of publication:
18.05.2016 Bulletin 2016/20

(51) Int Cl.:
G01N 23/04 (2006.01)     G01N 23/20 (2006.01)

(21) Application number: 14192694.9

(22) Date of filing: 11.11.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Paul Scherrer Institut
5232 Villigen (CH)

(72) Inventors:
• Schmitt, Bernd
79787 Lauchringen (DE)
• Stampanoni, Marco
5304 Endingen (CH)
• Wang, Zhentian
5200 Brugg (CH)

• Kagias, Matias
CH-8046 Zürich (CH)
• Bergamaschi, Anna
5400 Baden (CH)
• Dinapoli, Robert
CH-5415 Nussbaumen (CH)
• Cartier, Sebastian
5415 Nussbaumen (CH)
• Mozzanica, Aldo
5210 Windisch (CH)

(74) Representative: Fischer, Michael
Siemens AG
Postfach 22 16 34
80506 München (DE)

(54) **System for obtaining quantitative x-ray images using Hilbert transform on imaged fringes**

(57) The invention is concerning grating based X-ray phase contrast imaging. More specifically, the invention is a single shot, single grating (phase) method capable of obtaining differential phase contrast, absorption and scattering images of a sample simultaneously. This is achieved by utilizing high resolution which is provided by single photon sensitivity of charge integrating detectors (with pixel sizes in the 10-50 $\mu$m range) or like. The high resolution (approx. 1 $\mu$m) allows the recording of the interference fringe (Talbot effect) that is created by a phase or absorption grating 1D or 2D. Once the fringe has been recorded a phase retrieval method based on the Hilbert Transform (HT) was developed in order to retrieve the three aforementioned images. The phase retrieval method provides average phase values (also absorption and scattering) for each pixel or area of the detector.

Fig. 1

## Description

The present invention relates to a system and a method for obtaining quantitative x-ray images from a sample wherein a differential phase contrast and a (small-angle) scattering data is obtained from an arrangement for x-rays, in particular hard X-rays.

X-ray grating interferometry (GI) [1] has been well established in the recent years. The GI systems and the corresponding methods allow the acquisition of three complementary contrasts associated with the physical properties of the sample, those are, absorption, differential phase and scattering. The high sensitivity of the differential phase signal to electron variations of the sample makes it suitable for investigating soft tissues and biological samples [2].

The systems and methods employ a grating (G1) in the X-ray beam to produce an interference pattern at certain distances downstream of the sample (Talbot effect). The three contrasts are encoded in the fringe and can be retrieved with the use of a second absorption grating (G2) which is placed right in front of a position-sensitive x-ray detector and scanned laterally, this is the so called phase stepping procedure [3].

The mechanical scanning during phase stepping is a time-consuming procedure in general which requires high precision motors and is prone to mechanical instabilities drift, vibrations etc. Additionally, the employment of the G2 grating blocks half of the photons, which constitutes a major limitation for applications of GI in medical imaging due to the dose efficiency and does not allow for a high photon utilization.

Alternative single-shot grating-based methods have been developed using only one phase grating (or absorption) with large-pitch (in the 100 $\mu$m range) creating an interference pattern or a projection image that can be recorded with lower resolution requirements, however these methods inevitably compromised the sensitivity and the image resolution [4].

It is therefore the objective of the present invention to provide a GI system that can be used eventually for medical imaging due to an effective photon utilization and high dose efficiency.

This objective is achieved according to the present invention by a method and a system for obtaining quantitative x-ray images from a sample wherein a differential phase contrast and a (small-angle) scattering data is obtained from an arrangement for x-rays, in particular hard X-rays, comprising:

(a) an x-ray source (X-rays);
(b) optionally a source absorption grating (G0);
(c) a 1D or 2D grating (G1) that generates an interference fringe or a projected periodic intensity fringe at defined distances;
(d) a detector for recording and resolving a spatially modulated version of the interference fringe or the projected periodic intensity fringe using actual pixels or virtual pixels;
(e) means of reconstructing the interference fringe or the projected periodic intensity fringe using one or multiple adjacent actual pixels or virtual pixels; and
(f) means for estimating the differential phase contrast and (small-angle) scattering data from one section of the respective reconstructed fringe.

The present invention therefore deals with this technical limitation by the use of one small pitch phase grating or one absorption grating which generates an interference or projective image at certain distances downstream the sample. The interference image is recorded by a detector that can achieve high resolution but without limiting the field of view.

A preferred embodiment of the present invention provides for a detector that is designed as a pixelated (2D) or stripe(1D) detector having a pixel size in the range of 10-50$\mu$m x 10-50 $\mu$m. This detector usually comprises a number of semiconductor photo diodes with an on-chip read-out circuitry for each diode in order to achieve a capability of single photon counting. This detector type provides a sufficient resolution that allows for a readout of the spatially modulated version of the interference fringe or the projected periodic intensity fringe using actual pixels or virtual pixels.

Preferably, detector may be a pixelated (2D) or stripe (1D) position-sensitive detector which has actual pixel size smaller than the period of the fringe and is therefore capable of resolving the fringe directly.

A further preferred embodiment of the present invention provides for the detector being capable of creating virtual pixel sizes in the 1$\mu$m x 1$\mu$m range, preferably by using a single photon sensitivity and an evaluation charge sharing capability, wherein the virtual pixels having a resolution to record a section of the 1D or 2D periodic intensity fringe generated by the 1D or 2D grating (G1). The evaluation charge sharing capability provides for an evaluation mechanism that is able to gain information on photon incidents on neighbored photo diode that have shared the impact dose of the same incident photon. This mechanism allows to evaluate the charge of photons that hit the detector at the edge of one distinct photo diode but created also a collateral charge in one or more photo diodes in the direct neighborhood of the hit photon diode and therefore create virtual pixel with desired pixel size.

As already indicated above, the present setup creates also the advantageous option that multiple adjacent pixels of the detector are grouped together to form one virtual pixel which records a section of the 1D or 2D periodic intensity fringe generated by 1D or 2D grating (G1).

Usually, in many scientific evaluation methods the actual measurement results are compared to a standard or a reference, such as a reference image or the like. Therefore, one further preferred embodiment of the present invention proposes the measure of recording a flat field image without the sample and a sample image of the periodic intensity fringe. In the case of a 1D grating and a pixel detector the recorded signal is integrated along the direction orthogonal to the periodic intensity fringe. The integration can be done within an actual pixel if a photon counting detector with single photon sensitivity and charge integration capability is used. Alternatively, the integration can be done for a selected number of actual pixels if a high resolution detector is used wherein the resolution per pixel is greater than the period of the spatially modulated version of the interference fringe or the projected periodic intensity fringe using actual pixels or virtual pixels.

With respect to the evaluation of the 1D or 2D grating based images, the retrieval of the differential phase and (small angle) scattering contrast of 1D periodic signals may be based on the Hilbert transform, wherein the differential phase and (small angle) scattering signals are given by

$$b(x) = \left| d_s(x) \backslash d_f(x) \right| = \left| b_s(x) \backslash b_f(x) \right|$$

$$\phi(x) = \arg\left( d_s(x) \backslash d_f(x) \right) = \phi_f(x) - \phi_s(x)$$

where

$$d(x) = -\tilde{\tilde{I}}(x) + i\tilde{I}(x)$$

and $\tilde{I}(\chi)$ is the Hilbert Transform of the periodic interference fringe

$$I(x) = a(x) + b(x) \cos\left( 2\pi f_c - \phi(x) \right),$$

the indices f and s refer to flat and sample fringes.

With respect to 2D grating based images, the retrieval of the differential phase contrast of 2D periodic signals may be based on the Hilbert Transform, wherein the differential phase and scattering contrasts are given by

$$\Phi(x) = \frac{S(x,y) - D(x,y)}{2},$$

and

$$\theta(x) = \frac{S(x,y) + D(x,y)}{2}$$

with

$$S(x,y) = \arg\left(\frac{A_s^+(x,y)}{A_f^+(x,y)}\right)$$

$$D(x,y) = \arg\left(\frac{A_s^-(x,y)}{A_f^-(x,y)}\right) ;$$

the complex numbers A- and A+ are calculated from the periodic interference fringe for the flat (f) and sample (s) image. Preferably, the 2D grating can be a phase grating that produces a 2D periodic fringe that is separable in x and y direction, wherein g(x,y) is the 2D periodic fringe which is written as g(x,y) = f (x) h(y).

Another option would be to exploit additionally an autocorrelation algorithm in order to retrieve differential phase contrast from 2D periodic intensity fringes.

Possible other alternatives or additions can be realized when weighted mean or median values of the differential phase contrast values are used within one actual pixel or when a stripe of the detector or an arbitrary area of the recorded intensity fringe produced by the Hilbert Transform based phase retrieval algorithm for 1D or 2D signals is used.

Further preferred embodiment of the method and the system are given in the remaining dependent claims.

Preferred embodiments of the present invention are described hereinafter with reference to the attached drawings which depict in:

Figure 1     schematically an experimental setup of a grating-based interferometer; and

Figure 2     schematically a physical pixel that is interpolated to create smaller size virtual pixels with higher resolution capable of recording an interference fringe generated by a setup according to Figure 1.

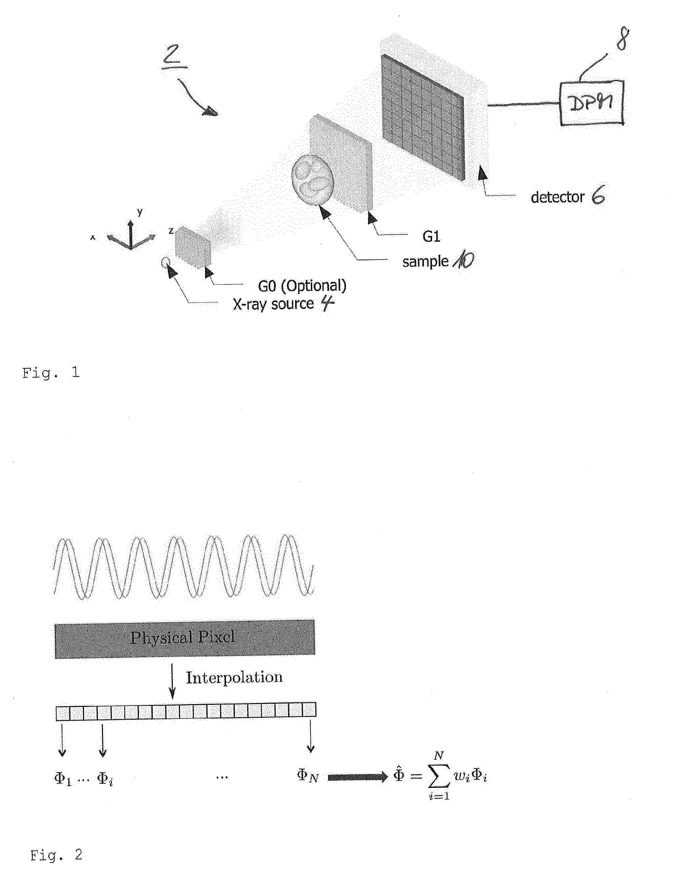

Figure 1 shows schematically an experimental setup of a grating based interferometer 2 comprising an x-ray source, an optional line grating G0, a phase grating G1, a position sensitive pixelated detector 6 and a data processing means 8. The phase grating G1 is a 1D or 2D grating that generates an interference fringe or a projected periodic intensity fringe at defined distances. The detector 6 records and resolves a spatially modulated version of the interference fringe or the projected periodic intensity fringe using actual pixels or virtual pixels. The data processing means 8 reconstruct the interference fringe or the projected periodic intensity fringe using one or multiple adjacent actual pixels or virtual pixels and estimates the differential phase contrast and (small-angle) scattering data from one section of the respective reconstructed fringe.

A preferred measure for achieving this goal provides for a detector 6 that has single photon sensitivity of charge integration with analog readout. Such detectors currently developed by the detector group at Paul Scherrer Institut are the GOTTHARD [5] (stripe detector) and the MOENCH [6] (pixel detector). The exposure time is set in the microsecond range in order to capture single photon events on the detector 6, by reading out the charge values at the pixels in the neighborhood of the incident photon event. The spatial position of the incident photon can be estimated with a resolution much higher than the actual pixel size of the detector 6 (10-50 $\mu$m x 10-50 $\mu$m). This is analog to segmenting the actual pixel of the detector 6 into virtual pixels of much smaller size ($\sim$ 1$\mu$m). The current resolution of this technique is in the range of one micrometer which is sufficient to record interference fringes with pitches of a few micrometers. A further aim of the proposed invention is to provide absorption differential phase and scattering contrast images of a pixel size in the (10-50 $\mu$m)$^2$ range, therefore a phase retrieval method retrieves average differential phase values for each actual pixel of the detector 6.

In the case of a detector 6 with sufficiently small pixel size to record directly the interference fringe again actual pixels (~1$\mu$m) are grouped together to form virtual pixels of larger dimensions (10-50 $\mu$m). The phase retrieval method that is described in the following section covers both cases.

Figure 2 therefore schematically shows a physical pixel that is interpolated to create smaller size virtual pixels with higher resolution capable of recording the interference fringe.

A robust phase retrieval method based on the Hilbert Transform (HT) is developed to overcome the unique challenge.

The recorded interference fringe in the 1D case can be approximated as

$$I(x) = a(x) + b(x)\cos\big(2\pi f_c - \phi(x)\big) \quad (1.1)$$

The information of the three contrasts are encoded in the unknown terms a(x) (absorption), $\phi$(x) (differential phase) and b(x) (scattering). It is assumed that the term a(x) is varying much slower than the frequency $f_c$ of the fringe within the area of interest, then the HT of the fringe is equal to the HT of the second term which will be calculated analytically. First, equation 1.1 is rewritten using Euler's identity

$$B(x) = \frac{1}{2}\big(c(x)\exp(i2\pi f_c x) + c^*\exp(i2\pi f_c x)\big) \quad (1.2)$$

where

$$c(x) = b(x)\exp\big(-i\phi(x)\big) \quad (1.3)$$

The HT is defined as a multiplication with -isgn( f ) in the frequency domain. The Fourier transform of B(x) is given by

$$\hat{B}(f) = \frac{1}{2}\big(\hat{c}(f - f_c) + \hat{c}^*(f + f_c)\big) \quad (1.4)$$

This spectrum can be expressed as the sum of the spectrums of c(x) and c*(x) centered at $f_c$ and -$f_c$ respectively. Under the assumption that the bandwidth of c(x) (BW) fulfills the following requirement

$$\frac{BW}{2} < f_c, \quad (1.5)$$

the HT can be performed as

$$-isgn(f)\hat{B}(f) = \frac{1}{2}\left(\hat{c}(f - f_c)\exp\left(-\frac{i\pi}{2}\right) + \hat{c}^*(f + f_c)\exp\left(\frac{i\pi}{2}\right)\right) \quad (1.6)$$

Applying the inverse Fourier transform and using Euler's formula to equation 1.6 we obtain the HT of the interference fringe

$$\tilde{I}(x) = b(x)\sin\big(2\pi f_c x - \phi(x)\big) \quad (1.7)$$

According to HT property

$$\tilde{\tilde{I}}(x) = -b(x)\cos\big(2\pi f_c x - \phi(x)\big) \quad (1.8)$$

In order to retrieve the differential phase two fringes are recorded, a reference fringe If without the sample and a fringe with the sample in beam position Is. For each fringe, the following complex signal known as the analytical signal is defined:

$$d(x) = -\tilde{\tilde{I}}(x) + i\tilde{I}(x) = b(x)\exp(i(2\pi f_c - \phi(x))) \quad (1.9)$$

The three contrasts are finally given by the following expressions:

$$a(x) = \frac{\tilde{\tilde{I}}_s(x) + \tilde{I}_s(x)}{\tilde{\tilde{I}}_f(x) + \tilde{I}_f(x)} \quad (1.10)$$

$$b(x) = \big|d_s(x)\backslash d_f(x)\big| = \big|b_s(x)\backslash b_f(x)\big| \quad (1.11)$$

$$\phi(x) = \arg\big(d_s(x)\backslash d_f(x)\big) = \phi_f(x) - \phi_s(x) \quad (1.12)$$

The method can be generalized also for 2D periodic structures that are separable in x and y. In the case of a 2D checker board grating the flat (without sample) and the sample interference fringes can be written as:

$$I_f(x,y) = \sin\big(2\pi f_c x - \phi_f(x)\big)\sin\big(2\pi f_c y - \theta_f(y)\big) \quad (1.13)$$

$$I_s(x,y) = \sin\big(2\pi f_c x - \phi_s(x)\big)\sin\big(2\pi f_c y - \theta_s(y)\big) \quad (1.14)$$

Our objective is to retrieve $\Phi(x) = \Phi_f(x) - \Phi_s(x)$ and $\theta(y) = \theta_f(y) - \theta_s(y)$. For both sample fringes and flat fringes, the following calculations are performed. First, the HT is applied only in the x-direction which is possible due to the separability in x and y of the fringe pattern:

$$\tilde{I}^x(x,y) = -\cos\big(2\pi f_c x - \phi(x)\big)\sin\big(2\pi f_c y - \theta(y)\big) \quad (1.15)$$

As a next step the following complex number is formed:

$$R(x,y) = -\tilde{I}^x(x,y) + i\tilde{\tilde{I}}^x(x,y) = \sin(2\pi\, f_c y - \theta(y))\exp(i(2\pi f_c x - \phi(x)))$$

$$(1.16)$$

The same operation is performed with R(x,y)instead of I(x,y) but in the y-direction which finally leads to the following complex number:

$$A^+(x,y) = \exp\left(i\left(2\pi f_c x - \phi(x)\right)\right)\exp\left(i\left(2\pi f_c y - \theta(y)\right)\right) \quad (1.17)$$

By performing this operations for the flat and sample fringe and calculating the argument of their ratio the following value is retrieved:

$$S(x,y) = \varPhi(x) + \theta(y) \quad (1.18)$$

As a next step the same procedure is followed but instead of forming the complex quantity

$$R(x,y) = -\tilde{I}^x(x,y) + i\tilde{\tilde{I}}^x(x,y) \quad (1.19)$$

the complex expression

$$R(x,y) = -\tilde{I}^x(x,y) - i\tilde{\tilde{I}}^x(x,y) \quad (1.20)$$

is formed which finally leads to

$$A^-(x,y) = \exp\left(-i\left(2\pi f_c x + \phi(x)\right)\right)\exp\left(i\left(2\pi f_c y - \theta(y)\right)\right) \quad (1.21)$$

Calculating again the argument of the ratio yields:

$$D(x,y) = \varPhi(x) - \theta(y) \quad (1.22)$$

Finally, the phase shift in x and y are given by

$$\varPhi(x) = \frac{S(x,y) - D(x,y)}{2} \quad (1.23)$$

$$\theta(y) = \frac{S(x,y) + D(x,y)}{2} \quad (1.24)$$

### References

[1] C. David et al, Applied Physics Letters, 81 (2002) p. 3287-3289.
[2] Z. Wang et al, Nature Communications, 5 (2014)
[3] T. Weitkamp et al, Optics Express, 13 (2005) p. 6296-6304.
[4] H. Wen et al, Optics Letters, 35 (2010) p. 1932.
[5] A. Mozzanica et al, JINST, 7 (2012)
[6] R. Dinapoli et al, JINST, 9 (2014)
[7] A. Schubert et al, Journal of Synchrotron Radiation, 19 (2012) p. 359-365.
[8] R. Turchetta, Nuclear Instruments and Methods in Physics Research A, 335 (1993) p. 44-58
[9] M. Stampanoni et al, Synchrotron Radiation Instrumentation, 877 (2007) p. 848

### Claims

**1.** A system for obtaining quantitative x-ray images from a sample wherein a differential phase contrast and a (small-angle) scattering data is obtained from an arrangement for x-rays, in particular hard X-rays, comprising:

(a) an x-ray source (X-rays);
(b) optionally a source absorption grating (G0);
(c) a 1D or 2D grating (G1) that generates an interference fringe or a projected periodic intensity fringe at defined distances;
(d) a detector for recording and resolving a spatially modulated version of the interference fringe or the projected periodic intensity fringe using actual pixels or virtual pixels;
(e) means of reconstructing the interference fringe or the projected periodic intensity fringe using one or multiple adjacent actual pixels or virtual pixels; and
(f) means for estimating the differential phase contrast and (small-angle) scattering data from one section of the respective reconstructed fringe.

**2.** The system according to claim 1, wherein the detector is a pixelated (2D) or stripe(1D) detector having a pixel size in the range of 10-50$\mu$m x 10-50 $\mu$m.

**3.** The system according to claim 1 or 2, wherein the detector is capable of creating virtual pixel sizes in the 1$\mu$m x 1$\mu$m range, for example by using single photon sensitivity and charge sharing capability, wherein the virtual pixels having a resolution to record a section of the 1D or 2D periodic intensity fringe generated by the 1D or 2D grating (G1).

**4.** The system according to claim 1 or 2, wherein the detector is a pixelated (2D) or stripe (1D) position-sensitive detector which has actual pixel size smaller than the period of the fringe and is capable resolving the fringe directly.

**5.** The system according any of the preceding claims, wherein multiple adjacent pixels of the detector are grouped together to form one virtual pixel which records a section of the 1D or 2D periodic intensity fringe generated by 1D or 2D grating (G1).

**6.** The system according any of the preceding claims, wherein a flat field image without the sample and a sample image of the periodic intensity fringe are recorded wherein in the case of a 1D grating and a pixel detector the recorded signal is integrated along the direction orthogonal to the periodic intensity fringe, and wherein the integration is done within an actual pixel if a photon counting detector with single photon sensitivity and charge integration capability is used or the integration is done for a selected number of actual pixels if a high resolution detector is used.

7. A system according to any of the preceding claims, wherein the retrieval of the differential phase and (small angle) scattering contrast of 1D periodic signals is based on the Hilbert transform, wherein the differential phase and (small angle) scattering signals are given by

$$b(x) = \left| d_s(x) \backslash d_f(x) \right| = \left| b_s(x) \backslash b_f(x) \right|$$

$$\phi(x) = \arg\left( d_s(x) \backslash d_f(x) \right) = \phi_f(x) - \phi_s(x)$$

where

$$d(x) = -\tilde{\tilde{I}}(x) + i\tilde{I}(x)$$

and $\tilde{I}(\chi)$ is the Hilbert Transform of the periodic interference fringe

$$I(x) = a(x) + b(x)\cos\left(2\pi f_c - \phi(x)\right),$$

the indices f and s refer to flat and sample fringes.

8. The system according to any of the preceding claims 1 to 6, wherein the retrieval of the differential phase contrast of 2D periodic signals is based on the Hilbert Transform, wherein the differential phase contrast in x ($\Phi(x)$) and y ($\Theta(y)$) direction are given by

$$\Phi(x) = \frac{S(x,y) - D(x,y)}{2},$$

and

$$\Theta(y) = \frac{S(x,y) + D(x,y)}{2}$$

with

$$S(x,y) = \arg\left( \frac{A_s^+(x,y)}{A_f^+(x,y)} \right)$$

$$D(x,y) = \arg\left(\frac{A_s^-(x,y)}{A_f^-(x,y)}\right) ;$$

the complex numbers A- and A+ are calculated from the periodic interference fringe for the flat (f) and sample (s) image.

9.  The system according to claim 8, wherein the 2D grating is a phase grating that produces a 2D periodic fringe that is separable in x and y direction, wherein g(x,y) is the 2D periodic fringe which is written as g(x,y) = f(x) h(y).

10. The system according to any of the preceding claims wherein an autocorrelation algorithm is exploited in order to retrieve differential phase contrast from 2D periodic intensity fringes.

11. The system according to any of the preceding claims, wherein mean, weighted mean or median values of the differential phase contrast values are used within one actual pixel or stripe of the detector or an arbitrary area of the recorded intensity fringe produced by the Hilbert Transform based phase retrieval algorithm for 1D or 2D signals is used.

Fig. 1

$$\hat{\Phi} = \sum_{i=1}^{N} w_i \Phi_i$$

Fig. 2

EP 3 021 110 A1

Europäisches
Patentamt

European
Patent Office

Office européen
des brevets

# EUROPEAN SEARCH REPORT

Application Number

EP 14 19 2694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | F. PFEIFFER ET AL: "Hard-X-ray dark-field imaging using a grating interferometer", NATURE MATERIALS, vol. 7, no. 2, 13 January 2008 (2008-01-13), pages 134-137, XP55003146, ISSN: 1476-1122, DOI: 10.1038/nmat2096 | 1,2,6, 10,11 | INV. G01N23/04 G01N23/20 |
| Y | * the whole document * | 3-5,7-9 | |
| Y,D | A. SCHUBERT ET AL: "Micrometre resolution of a charge integrating microstrip detector with single photon sensitivity", JOURNAL OF SYNCHROTRON RADIATION, vol. 21, no. 3, 15 March 2012 (2012-03-15) , pages 295-365, XP055164618, ISSN: 0909-0495, DOI: 10.1107/S090904951200235X * abstract * | 3-5 | |
| Y | Wenxiang Cong ET AL: "Fourier transform based iterative method for x-ray differential phase-contrast computed tomography", , 24 June 2011 (2011-06-24), XP055164517, Retrieved from the Internet: URL:http://arxiv.org/abs/1106.5101 [retrieved on 2015-01-23] * the whole document * | 7-9 | TECHNICAL FIELDS SEARCHED (IPC) G01N |

-/--

The present search report has been drawn up for all claims

| Place of search | Date of completion of the search | Examiner |
|---|---|---|
| The Hague | 26 January 2015 | Steinmetz, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | Application Number<br>EP 14 19 2694 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | ARNISON M R ET AL: "Using the Hilbert transform for 3D visualization of differential interference contrast microscope images",<br>JOURNAL OF MICROSCOPY, BLACKWELL SCIENCE, GB,<br>vol. 199, July 2000 (2000-07), pages 79-84, XP002397531,<br>ISSN: 0022-2720, DOI:<br>10.1046/J.1365-2818.2000.00706.X<br>* the whole document *<br>----- | 7-9 | |

TECHNICAL FIELDS
SEARCHED (IPC)

The present search report has been drawn up for all claims

| Place of search | Date of completion of the search | Examiner |
|---|---|---|
| The Hague | 26 January 2015 | Steinmetz, Johannes |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. DAVID et al.** *Applied Physics Letters,* 2002, vol. 81, 3287-3289
- **WANG et al.** *Nature Communications,* 2014, 5
- **WEITKAMP et al.** *Optics Express,* 2005, vol. 13, 6296-6304
- **WEN et al.** *Optics Letters,* 2010, vol. 35, 1932
- **MOZZANICA et al.** *JINST,* 2012, 7
- **DINAPOLI et al.** *JINST,* 2014, 9
- **A. SCHUBERT et al.** *Journal of Synchrotron Radiation,* 2012, vol. 19, 359-365
- **R. TURCHETTA.** *Nuclear Instruments and Methods in Physics Research A,* 1993, vol. 335, 44-58
- **M. STAMPANONI et al.** *Synchrotron Radiation Instrumentation,* 2007, vol. 877, 848